# EUROPEAN PATENT APPLICATION

(11) **EP 1 798 703 A1**
(43) Date of publication of application: **20.06.2007**
(21) Application number: 06254692.4
(22) Date of filing: 08.09.2006
(51) Int. Cl.: G09B 19/00

(54) **System for identifying and selecting product family components**

(30) Priority: 11.11.2005 US 735607 P; 26.01.2006 US 340780
(71) Applicant: Arrow Fastener Co., Inc., Saddle Brook, NJ 07663 (US)
(72) Inventor: Newman, William B., Basking Ridge New Jersey 07920 (US); Bostrom, Marie A., Boonton New Jersey 07005 (US); Abrams, Allan D., Saddle River New Jersey 07458 (US); Abrams, Joshua L., Upper Saddle River New Jersey 07458 (US)
(74) Representative: Chamberlain, Alan James

(57) **Abstract**

A system for teaching a user to identify a family of items is provided including a matching symbol having an identifiable family indicator and a teaching symbol indicating a matching of the family indicator to the family of items. The teaching further illustrates compatibility of the family of items with the family indicator.

## Description

### CROSS REFERENCE TO RELATED APPLICATIONS

This application claims priority to U.S. Provisional Patent Application Serial No. 60/735,607, entitled "System for Identifying and Selecting Product Family Components," filed on November 11, 2005, which is hereby incorporated in its entirety by reference.

### TECHNICAL FIELD

The embodiments of the invention described herein are generally directed to packaging systems.

### BACKGROUND

The display and marketing of a family of items presents a unique set of problems when a user searches for compatible items. One difficulty is determining which of the items presented, among a multitude of choices, are designed for use with each other.

Often, a user will attempt to match arbitrary information related to the products (e.g., type and size) in an attempt to determine if the items are compatible. However, this method can be time consuming and fruitless depending upon whether there are unique aspects of each item that must be taken into consideration but are not easily identifiable. When faced with a mass of choices and variations, a consumer may become disheartened at the search or may choose an improper combination of items based on faulty logic in matching the qualities of the items.

Another problem is illustrated with the marking systems for identifying items. One approach is to use a chart or table including part numbers that indicate the compatibility of certain other items. However, such a system is typically placed on the back of the packaging as a chart or table on the face of a package, and is generally not considered a handsome first impression to a prospective user. Thus, the user is not provided with immediate information about whether or not a number of products are compatible. This approach requires a user to move the item and closely inspect the table to determine compatibility. Further, depending upon the format of the table, the user may expend a significant amount of time deciphering the table to determine compatibility.

Additionally, the written or table method may require a user to comprehend the language that the table uses. However, this method poses difficulties to the packaging designer to place a multilingual system in a confined area. When the required space is not available for such methods, the costs of the packaging may be significantly increased if separate packaging is required for each language, or set of languages.

In addition to the drawbacks already mentioned, the methods presented above do not teach a user how to match compatible items. They require a user to expend valuable product selection time to decipher and understand tables or listings. Further, the prior art requires a user to understand a particular printed language. Additionally, the prior art does not attract a user's attention to the matching system. Indeed, when using a table or chart system to identify components by part number, the table or chart does not lend itself to be printed on the front of a package because of space and marketing requirements.

Therefore, a need exists for a system for identifying and selecting product family components that teaches a user how to match items. It is further desirable that the system directs the user's attention to the matching system. It is also desirable that the matching system attract the user's attention to the packaging itself to differentiate the items from competitor's items. Thus, it is desirable to provide a system that may be located on a surface immediately viewable to the user. Additionally, it is desirable to provide a matching system that uses a minimum of packaging space to accomplish the teaching and matching goals. It is further desirable to provide a matching system that is language independent. Moreover, it is desirable that the system further reduces costs by providing a single packaging requirement.

### SUMMARY

A system for teaching a user to identify a family of items is provided including a matching symbol having an identifiable family indicator and a teaching symbol indicating a matching of the family indicator to the family of items. The teaching further illustrates compatibility of the family of items with the family indicator.

### BRIEF DESCRIPTION OF THE DRAWINGS

The features and inventive aspects of the embodiments will become more apparent upon reading the following detailed description, claims, and drawings, of which the following is a brief description:

FIG. 1 is a plan view of a teaching system according to an embodiment;

FIG. 2 is a plan view of a teaching system according to an embodiment;

FIG. 3 is a plan view of a compact teaching system according to an embodiment.

### DETAILED DESCRIPTION

Referring now to the drawings, illustrative embodiments are shown in detail. The embodiments described herein are not intended to be exhaustive or otherwise limit or restrict the invention to the precise form and configuration shown in the drawings and disclosed in the following detailed description.

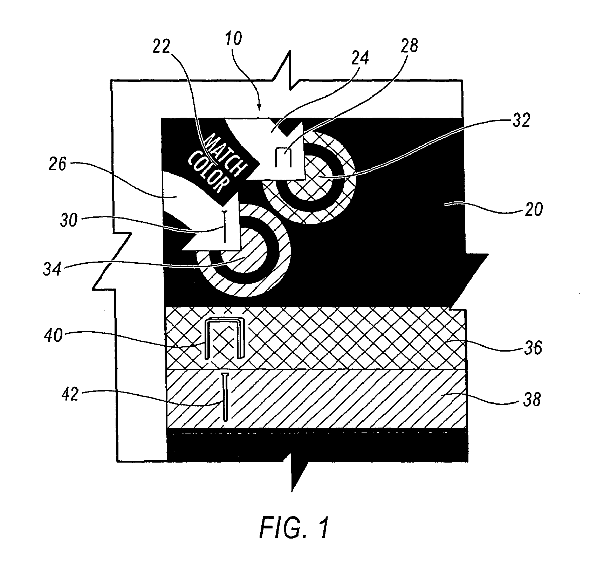

Referring now to FIG. 1, an embodiment of a product packaging system teaching family indicator matching and icon recognition is shown. Teaching system 10 includes a package face 20, a teaching text 22, a first teaching symbol 24, a second teaching symbol 26, a first consumable symbol 28, a second consumable symbol 30, a first matching symbol 32, a second matching symbol 34, a first matching band 36, and a second matching band 38, as shown. Package face 20 is a portion of a product packaging system, typically provided on a side viewable by a prospective user. The product packaging may include configurations such as a paper-based box, a plastic covering, or an insert behind a clear plastic covering. Further, package face 20 may be printed upon a label affixed to the product packaging. The product packaging may include a reusable item (e.g., a staple gun), consumable items (e.g., staples or nails), or the packaging may include reusable items that work in conjunction with other reusable items (e.g., a light to be affixed to a staple gun).

First and second consumable symbols 28, 30 indicate a type of consumable that is compatible with a reusable item. In one embodiment, the reusable item is a staple gun and first consumable symbol 28 indicates that a "staple" may be used with the reusable item. Second consumable symbol 30, in this embodiment configured to indicate a nail, is also affixed to package face 20 indicating that a nail consumable may also be used with the reusable item.

First and second matching symbols 32, 34 are configured differently and indicate a family indicator coding system that allows a user to understand that consumable items having a matching family indicator may be used with the reusable item. In the present embodiment, first and second matching symbols 32, 34 are shaped to indicate a concentric ring about a point. Such a shape indicates to users that the family indicators are the objective of their search for compatible consumable items.

First and second teaching symbols 24, 26 are placed in conjunction with consumable symbols 28, 30 and matching symbols 32, 34. For simplicity, the teachings of first teaching symbol 24 are described but may also be applied to second teaching symbol 26. First teaching symbol 24 is an attention attracting mechanism, in this embodiment configured as a "pointer," that indicates to a user the reusable items in the family that are compatible with the consumable item within the package. The size, shape, and family indicator of first teaching symbol 24 are configured such that the users' attention is directed to the area where the product packaging system teaches the use of matching consumable item family indicators. In this embodiment, first teaching symbol 24 is configured such that the family indicator is bright yellow and the head of the "pointer" is touching or overlapping the center of first matching symbol 32. However, first teaching symbol 24 may also be configured outside of, or away from, first matching symbol 32. In both cases, the direction of the "pointer" indicates to the user to direct their attention to first matching symbol 32. Further, first teaching symbol 24 may also be configured as a family indicator other than yellow depending upon the surrounding color of package face 20 and/or first and second matching symbols 32, 34.

Teaching text 22 explicitly indicates to a user how the product packaging system is to be used. In the present embodiment, teaching text 22 is configured as "MATCH COLOR" to teach a user that the consumable items matching the family indicator of first matching symbol 32 and second matching symbol 34 are compatible with the reusable item within the package. The user then will look for consumable items having a similar color of family indicator and will know that these consumable items are compatible with the reusable item in the package. In the present embodiment, teaching text 22 is placed between first and second teaching symbols 24, 26 so that the user's attention is also directed to explicit teachings of teaching text 22. However, teaching text 22 may also be placed at a location adjacent to the general area of the product packaging system. In an alternative embodiment, teaching text 22 may be located to the side of teaching system 10. In yet another alternative embodiment, teaching text 22 may be located on a storage shelf or a sign located near the reusable or consumable items. In a further embodiment, teaching system 10 may be located in a retail setting at a point of purchase display.

First and second matching bands 36, 38 indicate to a user those products having compatibility. In the present embodiment, first matching band 36 further includes a third consumable symbol 40 and second matching band 38 includes a fourth consumable symbol 42. Additionally, first and second matching bands 36, 38 are placed close to teaching system 10 on package face 20. The proximity of first and second matching bands 36, 38 further allow a user to appreciate teaching system 10. In this embodiment, first matching band 36 and second matching band 38 have a respective coloring the same as first matching symbol 32 and second matching symbol 34. The family indicator colors indicate that an item having a similar family indicator color is compatible with the item in the packaging that first and second matching bands 36, 38 are placed upon. The family indicator color, along with the shape of third and fourth consumable symbols 40, 42 illustrate to a user that that an item having a matching family indicator color is compatible with the package contents.

Further, the concept of multiple sub-families is taught by the multiple family indicator symbols and bands on package face 20. In this embodiment, first matching symbol 32 and second matching symbol 34 teach that the families having similar coloring are compatible with the item. Similarly, the presence of first and second matching bands 36, 38 teaches that both families are compatible. Additionally, first and second matching bands 36, 38 include third and fourth consumable symbols 40, 42 that indicate what type of item family is taught by the family indicator. In this embodiment, the family indicator is indicated as a color.

In an alternative embodiment, first matching band 36 is placed on the package of a consumable. In such an embodiment, the indication to the user is that the contents of the package are compatible with an item having a matching family indicator. That is to say, one aspect of the teaching is that items having the same family indicators (i.e., matching family indicators) are compatible with each other.

First matching band 36 may be printed or applied to a portion of a package or may be wrapped around the entirety of the package. Alternatively, first matching band 36 may cover a substantial portion of the packaging. Second matching band 38, in this embodiment applied to the packaging of the reusable item, may also be applied in the same manner as first matching band 36. Both first and second matching bands 36, 38 may alternatively be configured as squares, rectangles, circles, or other shapes. The bands may be a general geometric representation that allows a user to match the family indicator color with a family of products that are compatible with each other. Such a system allows the family indicator color, in at least a portion of the package represented, for example represented by a band, in order to signal the consumable is compatible with the reusable item having a similar family indication or coloration.

Teaching system 10 may be placed on package face 20 at the front, sides, or rear of the packaging. In a preferred embodiment, teaching system 10 is placed at a location easily viewed by the user such that various elements are unobstructed. Further, teaching system 10 may be placed on shelves where the packages are placed for user view. Additionally, teaching system 10 may be placed on posters or advertisements indicating to a user that the manufacturer has developed a system that allows a user to easily identify compatible items. Such a placement may allow a manufacturer, a distributor, a seller, or a retailer, to attract more users where the user knows the difficulties of identifying and locating the consumables are time consuming and troublesome.

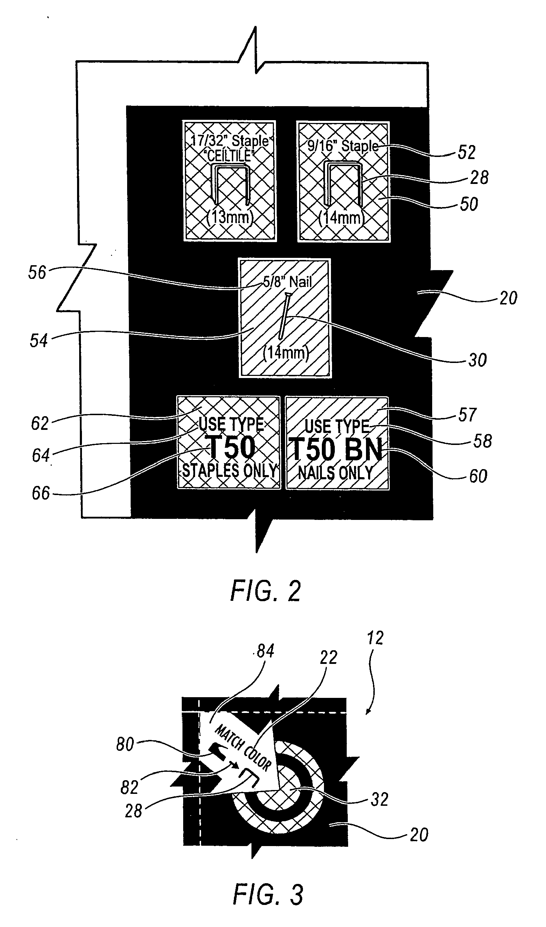

Referring now to FIG. 2 an alternative embodiment of a teaching system is shown. A first consumable indicator 50, a first consumable text 52, a second consumable indicator 54, a second consumable text 56, a first product type indicator 62, a second product type indicator 57, are provided on package face 20. First consumable indicator 50 is similarly colored to first matching symbol 32 and second consumable indicator 54 is similarly colored to second matching symbol 34. First consumable indicator 50 is for use in conjunction with teaching system 10 and allows a user to match the color of first consumable indicator 50 with a reusable item or a consumable item.

Within first consumable indicator 50, first consumable text 52 and first consumable symbol 28 are provided. Within second consumable indicator 54, second consumable text 56 and second consumable symbol 30 are provided. Thus, the types of consumables (e.g., a staple or a nail) are matched with a family indicator. First and second consumable texts 52, 56 explicitly indicate to a user what characteristic of consumables are compatible with the family indicator code, and further, which families are compatible with the reusable item. In this embodiment, the characteristic of a staple is affiliated with the family indicator code belonging to first consumable indicator 50. A nail is affiliated with the family indicator code belonging to second consumable indicator 54. As illustrated in FIG. 2, characteristics may include nails as well as staples. Further, the characteristics may include any meaningful indicator for the consumable item.

Further, as part of first consumable indicator 50, first consumable text 52 calls for a particular staple size. Second consumable text 56 calls for a particular nail size. Not only is the size of consumable indicated, but the type of consumable (e.g., staple or nail) is indicated.

For more explicit instruction, first product type indicator 62 includes a first direction text 64 and a first product type text 66. First product type indicator 62 is configured the same as first consumable indicator 50 to indicate their compatibility and shared teachings. Further, first direction text 64 teaches a user that a family of consumables is to be used with the package contents. Additionally, because the configuration (in this example coloration) of first product type indicator 62 is the same as first matching symbol 32 and first matching band 36 (see FIG. 1), the user is taught that the particular family of consumables indicated is for use with the family of items indicated by the same configuration. Similarly, first product type text 66 explicitly defines a family of fasteners for use with similarly coded items.

Also defined explicitly, second product type indicator 57, having the same configuration as second consumable indicator 54, includes a second direction text 58 and a second product type text 60 that indicate a family of compatible items. Further, the compatibility of second matching symbol 34, second matching band 38, second consumable indicator 54, second product type indicator 57, and second product type text 60, is taught.

Referring now to FIG. 3, an alternative embodiment of a teaching system including family indicator matching and symbol recognition is shown. In this embodiment, a compact teaching system 12 is configured such that a reusable symbol 80, an indicating symbol 82, first consumable symbol 28, and teaching text 22, are provided within a third teaching symbol 84. Reusable symbol 80 is configured in this embodiment as a "staple gun." First consumable symbol 28 is configured as a "staple." Indicating symbol 82 is configured as a pointer that points from reusable symbol 80 to first consumable symbol 28 such that a user will understand that the two items are compatible, and are for use, with each other. In the present case, indicating symbol 82 directs the users' attention to the fact that a "staple gun" is compatible with a "staple." Thus, if a user is inspecting a staple gun, they are directed to look for the matching staples by indicating symbol 82. Indicating symbol 82 may alternatively be embodied in the opposite direction where the staple points to a "staple gun." Such an embodiment may be preferred when placed on a package of staples.

As with previous embodiments, teaching text 22 explicitly details using the family indicator of first matching symbol 32 to obtain a reusable item and a consumable item that are compatible. Third teaching symbol 84 is also configured similarly with the previous embodiments such that the family indicators (e.g., a shape and/or a color) are provided to attract a users' attention and teach family indicator matching.

Compact teaching system 12 has an advantage of being able to be placed upon package face 20 in a small area. The smaller size allows compact teaching system 12 to be located on small boxes, such as staple boxes, while still teaching the product packaging system to the user. Such an embodiment is preferable because a retailer cannot guarantee whether a user will first happen upon a reusable item, generally having a larger package, or a consumable item, in some cases having a diminutive package. When a user first gazes upon a package with a small size, the compact teaching system 12 has the advantage of being able to teach the entire matching scheme without consuming a large portion of package face 20. Further, in situations where the packaging is so small that placement of compact teaching system 12 is undesirable on the front of a package, compact teaching system 12 may be easily placed on the sides of the package.

Referring now to FIGS. 1-3, teaching systems 10, 12 provide a simple and robust system allowing a user to identify goods that are compatible with each other. It is important to note that the teaching systems 10, 12 are provided such that they may be placed on package face 20 of a consumable item or a reusable item. In the case of first and second consumable symbols 28, 30, the shapes of the symbols are configured such that the user understands that a nail and a staple are to be used with the package contents (in this embodiment a staple gun). These shapes provide a visual identity of the consumable with the reusable item. Further, the presence of two family indicators for first and second matching symbols 32, 34 indicate to the user that goods are available for the reusable items that have a matching family indicator. A user can then seek out a consumable item having the similar family indicator. For example, a user may locate a consumable package having compact teaching system 12 of FIG. 3. The user then knows that the contents of the package are compatible with the contents of a package having similar family indicators.

In yet another aspect of the embodiments, a user is not required to know a language or alphabet in order to use the packaging system. For example, if teaching text 22 is removed from package face 20 the system is still operable and taught to the user. Teaching text 22 is preferable in some embodiments to expedite the understanding of the system. However, teaching text 22 is not necessary to understand the matching system.

Further, referring to FIGS. 1 and 3, it is important to note that first teaching text 22, first teaching symbol 24, and first matching symbol 32 are located in close proximity on package face 20. Thus, by virtue of the closeness, the user is taught that the items will work with each other (e.g., the items "go together").

Also, it is important to note that first teaching symbol 24 and first matching symbol 32 overlap each other in their respective physical boundaries. Such an overlap provides the teaching, or connection, of the item to the family indicator. If, for example, the respective items were spread across package face 20 without the organization in the embodiment, there would be no teaching of the compatible family components. However, as represented by the embodiments, the configuration of the elements is such that the teaching of the system is provided to the user. For example, first teaching symbol 24 attracts the user's attention to teaching system 10 as well as teaching that an item having a similar family indication will work within the item being inspected.

Additionally, where each element is partially obscured by another provides the teaching that the items are to be used in conjunction with each other. That is to say, the items are overlapping, and such overlapping teaches a connection between the items. For example, first consumable symbol 28 overlaps first teaching symbol 24 that in turn overlaps first matching symbol 32. Further, first consumable symbol 28 overlaps first matching symbol 32. Thus, first teaching symbol 24 connects and indicates that first consumable symbol 28 is used with the family indicator of first matching symbol 32.

As used throughout the application, the term family indicator preferably includes use of a color. However, the indication of a familial relationship may also be accomplished with shading, hatching, patterns, or icons. For example, in a situation where only single color printing is used, the package material may be white and the printing may be black. In this case, a series of stripes may be used to indicate the family of goods for use with each other. Alternatively, a pattern or shading may be used for indicating the families.

The preceding description has been presented only to illustrate and describe exemplary embodiments of the methods and systems of the present invention. It is not intended to be exhaustive or to limit the invention to any precise form disclosed. It will be understood by those skilled in the art that various changes may be made and equivalents may be substituted for elements thereof without departing from the scope of the invention. In addition, many modifications may be made to adapt a particular situation or material to the teachings of the invention without departing from the essential scope. Therefore, it is intended that the invention not be limited to the particular embodiment disclosed as the best mode contemplated for carrying out this invention, but that the invention will include all embodiments falling within the scope of the claims. The invention may be practiced otherwise than is specifically explained and illustrated without departing from its spirit or scope. The scope of the invention is limited solely by the following claims.

## Claims

1. A system for teaching a user to identify a family of items comprising:
a matching symbol having an identifiable family indicator;
a teaching symbol indicating a matching of said family indicator to the family of items, said teaching further illustrating compatibility of the family of items with said family indicator.

2. The system of claim 1, wherein said matching symbol and said teaching symbol at least partially overlap each other.

3. The system of claim 1, wherein said matching symbol and said teaching symbol are located closely relative to each another.

4. The system of claim 1, wherein said teaching symbol is configured to attract attention to the system.

5. The system of claim 1, wherein said teaching symbol is configured as a pointer.

6. The system of claim 1, wherein said family indicator is at least one of a color, an icon, a hatching, and a pattern.

7. The system of claim 1, wherein said matching symbol and said teaching symbol are placed at locations easily viewable to the user.

8. The system of claim 1, further comprising:
a matching text teaching the matching of the family indicator to the family of items, said matching text cooperatively teaching with said teaching symbol.

9. The system of claim 8, wherein said matching text teaches the presence of said family indicator for identifying the family of items.

10. The system of claim 8, wherein said matching text is located near said matching symbol and said teaching symbol.

11. The system of claim 1, further comprising an item symbol illustrating a member of the family of items.

12. The system of claim 11, wherein said item symbol is configured as at least one of a nail, a staple, and a consumable item.

13. The system of claim 11, wherein said item symbol at least partially overlaps said matching symbol and said teaching symbol.

14. The system of claim 1, wherein said matching symbol is configured as at least one of a square, a rectangle, a circle, a circle surrounded by a concentric ring, a stripe, a star, and a figure.

15. A packaging system for teaching a user to identify a family of items comprising:
a family indicator for identifying an item as a subset of the family of items;
a graphic representation of said item;
an attention attracting mechanism for directing the user to the packaging system, wherein the system further teaches the user to identify compatible items using said family indicator.

16. The system of claim 15, wherein said family indicator, said graphic representation, and said attention attracting mechanism at least partially overlap each other.

17. The system of claim 15, wherein said family indicator, said graphic representation, and said attention attracting mechanism are located closely relative to each another.

18. The system of claim 15, wherein said attention attracting mechanism is configured as a pointer.

19. The system of claim 15, wherein said family indicator is configured as at least one of a color, an icon, a hatching, and a pattern.

20. The system of claim 15, wherein said matching symbol is configured as at least one of a square, a rectangle, a circle, a circle surrounded by a concentric ring, a stripe, a star, and a figure.

21. The system of claim 15, further comprising:
a matching text teaching the use of said family indicator for identifying the family of items.

22. The system of claim 15, wherein said family indicator is located for viewing by the user.

23. A system for teaching a user to identify a family of compatible items comprising:
a first packaging for a first item including:
a first matching symbol having a family indicator;
a teaching symbol indicating the correlation of said family indicator with the family of compatible items;
a second packaging for a second item including:
a second matching symbol having said family indicator;

24. The system of claim 23, wherein said first matching symbol and said teaching symbol at least partially overlap each other.

25. The system of claim 23, wherein said first matching symbol and said teaching symbol are located closely relative to each another.

26. The system of claim 23, said first item packaging further comprising:
a first item icon illustrative of said first item;
a second item icon illustrative of said second item;
an indicating symbol teaching the compatibility of said first and said second items.

27. The system of claim 23, wherein said first matching symbol and said second matching symbol have the same shape.
